# EUROPEAN PATENT APPLICATION

(11) **EP 4 621 024 A1**
(43) Date of publication of application: **24.09.2025**
(21) Application number: 24895291.3
(22) Date of filing: 17.01.2024
(51) Int. Cl.: C09J 125/10, C09J 125/08

(54) **FLAME-RETARDANT TRANSPARENT HOT-MELT PRESSURE-SENSITIVE ADHESIVE, AND PREPARATION METHOD THEREFOR AND USE THEREOF**

(30) Priority: 29.11.2023 CN 202311614219
(71) Applicant: Steadychem (Shanghai) Co., Ltd, Pudong New Area Shanghai 200120 (CN)
(72) Inventor: PAN, Ting, Shanghai 200120 (CN); LI, Pengfei, Shanghai 200120 (CN); FANG, Wangsheng, Shanghai 200120 (CN)
(74) Representative: Murgitroyd & Company
(86) International application number: PCT/CN2024/072692
(87) International publication number: WO 2025/112177

(57) **Abstract**

Provided are a transparent flame-retardant hot-melt pressure-sensitive adhesive, a preparation method therefor and an application thereof, where the transparent flame-retardant hot-melt pressure-sensitive adhesive includes the following components in percent by weight: main resin 10-70%, tackifying resin 10-70%, an antioxidant 0.1-5%, a plasticizer 0-20%, a solid powder flame retardant 10-50%, and an anti-aging agent 0.1-3%, the main resin includes a polymer elastomer, and the polymer elastomer has a melt flow index of ≥5 g/10 min at a temperature of 200°C and a load of 5.0 kg; the solid powder flame retardant has a particle size of <35 µm and D50 ≤20 µm; and the hot-melt pressure-sensitive adhesive has a softening point of 80-140°C, a transparency of ≥50%, and a haze of ≤80%. The hot-melt pressure-sensitive adhesive provided by the present invention has excellent comprehensive properties, and is particularly suitable for rapid bonding of an optical cable.

## Description

### TECHNICAL FIELD

The present invention belongs to the technical field of hot-melt pressure-sensitive adhesives, and particularly relates to a transparent flame-retardant hot-melt pressure-sensitive adhesive, a preparation method therefor and an application thereof.

### BACKGROUND

Optical fiber communication has greatly facilitated people's lives, but traditional optical cables need to be fixed by tapes or clamps, which not only damages walls but also is cumbersome to operate. A method for bonding the optical cable using an adhesive is less destructive and relatively simpler. A transparent optical cable, also known as an invisible optical cable, can be fixed by selecting an appropriate adhesive. Being installed without requiring a conduit, the method is aesthetical, and can be quickly and easily installed around baseboards, doors, windows, and decorative strips, meeting the requirements for household entry with minimal disturbance to residents.

Two methods are generally used as specific bonding methods, that is, self-adhesive layer and externally applied adhesive layer. For the method of externally applied adhesive layer, a specially designed hot melt adhesive gun is usually used to heat adhesive during construction, a hot-melt adhesive is squeezed between a wall and the optical cable for bonding. Although the method is convenient for the production of optical cable, the optical cable requires a relatively high temperature resistance on the whole, and the construction is professional and difficult. For the method of self-adhesive layer, the invisible optical cable is directly bonded to the wall using heated self-adhesive coating adhesive, which has the advantages of simple construction, but suffers from reduced transparency and unaesthetic appearance after bonding caused by heating and other operations during construction. The Chinese Patent Application CN105969252A discloses an invisible optical cable and self-adhesive coating adhesive, where the invisible optical cable includes, from an inside out, natural-color optical fiber, a transparent tight jacket layer, and a self-adhesive coating layer; the self-adhesive coating layer is made of the self-adhesive coating adhesive, which is composed of the following components in percent by weight: 40-45% of a ethylene-ethyl acrylate copolymer, 11-15% of a tackifier; 25-30% synthetic wax or petroleum-derived wax, and the remaining components are other auxiliary agents, such as 2-5% of a polyvinyl chlorideflame retardant. By setting the formulations and proportions of ethylene-ethyl acrylate copolymer and other components, the patent can improve the transparency of the cured self-adhesive coating layer, lengthy opening period of time, good strength or initial tack before being cured. Furthermore, the Chinese Patent CN111029006B discloses an optical-electric hybrid cable, including a hybrid cable core and a transparent flame-retardant self-adhesive coating layer, where the hybrid cable core includes a plurality of optical fibers, a transparent second sheath, and a supporting frame, and the plurality of optical fibers are fixed inside the supporting frame; and the flame-retardant self-adhesive coating layer is wrapped around an outer surface of the hybrid cable core, and the self-adhesive coating layer is heated and melted to make the entire hybrid cable tightly adhered and fixed onto a wall surface. However, adhesive force of the main resin of the above inventions is relatively low, exhibits poor heat resistance and flame retardancy, making it difficult to meet the requirements for long-term safety and stability. Moreover, it is necessary to heat and melt the adhesive layer before bonding during construction, which is technically difficult and low efficiency, making it difficult to meet the needs of large-scale and rapid construction.

Therefore, providing an adhesive capable of being used for rapid bonding of optical cable, while ensuring high bonding performance and ease of construction, as well as providing comprehensive properties such as transparency, aesthetics, heat resistance, flame retardancy, durability, and stability, have become a technical problem that needs to be urgently solved in the field.

### SUMMARY

In view of the deficiencies in the prior art, the present invention aims to provide a transparent flame-retardant hot-melt pressure-sensitive adhesive, a preparation method therefor and an application thereof. By adjusting the ratios of all components and controlling the particle size of the materials, the present invention ensures excellent performance for the optical cable while maintaining transparency, aesthetic appearance, and ease and safety of use when the optical cable is fixed.

In a first aspect, the present invention provides a transparent flame-retardant hot-melt pressure-sensitive adhesive, a total weight of the transparent flame-retardant hot-melt pressure-sensitive adhesive is taken as 100%, and the transparent flame-retardant hot-melt pressure-sensitive adhesive includes the following components in percent by weight:
main resin 10-70%;
tackifying resin 10-70%;
an antioxidant 0.1-5%;
a plasticizer 0-20%;
a solid powder flame retardant 10-50%;
an anti-aging agent 0.1-3%,
where the main resin includes a polymer elastomer, and the polymer elastomer has a melt flow index of ≥ 5 g/10 min at a temperature of 200°C and a load of 5.0 kg;
the solid powder flame retardant has a particle size of < 35 µm and D50 ≤ 20 µm; and
the transparent flame-retardant hot-melt pressure-sensitive adhesive has a softening point of 80-140°C, a transparency of ≥ 50%, and a haze of ≤ 80%.

By adjusting the content of the main resin and the tackifying resin, the present invention can effectively regulate the softening point of the transparent flame-retardant hot-melt pressure-sensitive adhesive. The hot-melt pressure-sensitive adhesive has the softening point in a range of 80°C-140°C, which can meet the long-term stable bonding requirements in various application scenarios. For any high-temperature storage and transportation requirements, the softening point is preferably 95°C-140°C, which can prevent the occurrence of adhesive overflow at high temperatures. When a formulation with a slightly lower softening point is selected, the processing temperature can be properly reduced to reduce the production energy consumption and costs. The formulations of the transparent flame-retardant hot-melt pressure-sensitive adhesive of the present invention are highly flexible, which can save costs and meet various practical application requirements on the basis of meeting the comprehensive properties such as flame retardancy, transparency, and adhesive force.

In addition, the particle size of the solid powder flame retardant affects its compatibility and dispersibility in the adhesive system, which in turn affects the transparency, haze, and adhesive force of the hot-melt pressure-sensitive adhesive. After preliminary screening, the present invention adopts a laser diffraction method to measure the particle size D50 of the solid powder flame retardant to obtain a suitable range of particle size. The particle size D50 refers to a value that 50% of the particles in a particle size distribution curve of the particles are less than or equal to the same, and D50 is also called a median diameter or a median particle size. The solid powder flame retardant is screened to obtain the suitable range of particle size, and flame retardancy, light transmittance, and bonding properties can be taken into account only after it is combined with a resin matrix.

The plasticizer is mainly used to reduce the viscosity of the hot-melt pressure-sensitive adhesive, thereby increasing a melting speed, making it easier to wet a surface of the adhered material, and improving flexibility. Preferably, the plasticizer is mineral oil selected from one or more of white oil, naphthenic oil, and paraffin oil. The antioxidant is mainly used to improve the thermal stability of the hot-melt pressure-sensitive adhesive, prevent the aging of the hot-melt pressure-sensitive adhesive and reduce color changes. Preferably, an antioxidant 168 and an antioxidant 1010 are blended, where a ratio of the antioxidant 168 to the antioxidant 1010 is (0.2-5) : 1. Anti-aging performance of the hot-melt pressure-sensitive adhesive is improved by adding the anti-aging agent, the anti-aging agent is preferably a blend of TiO₂ nanoparticles and a light stabilizer, where the light stabilizer is selected from one or more of UV944 and UV622; and more preferably, a mass ratio of the TiO₂ nanoparticles and the light stabilizer is (1-20) : 100.

Further, the polymer elastomer is selected from one or more of a styrene-butadiene-styrene (SBS) block copolymer, a styrene-ethylene-butadiene-styrene (SEBS) copolymer, a hydrogenated styrene isoprene (SEP) diblock copolymer, a styrene-ethylene/propylene-styrene (SEPS) block copolymer, a styrene-isoprene-styrene (SIS) block copolymer, a butyl rubber (IIR), polyisobutylene (PIB), nitrile butadiene rubber (NBR), isoprene rubber (IR), poly(butadiene-acrylonitrile) (PBAN), synthetic polyolefin rubber (SPR), and poly(butadiene-styrene) (PBS).

Further, the tackifying resin has a softening point of 60-150°C and is selected from at least one of natural resin or synthetic resin, where the natural resin includes one or more of rosin, a rosin derivative, and terpene resin, and the synthetic resin includes one or more of petroleum resin, coumarone-indene resin, and styrene-based resin. The tackifying resin refers to a small molecule compound capable of increasing viscosity, particularly surface viscosity, and exhibits a higher glass transition temperature, and moreover, the tackifying resin can also improve wetting properties and initial tack properties.

Further, the main resin also includes an α-olefin copolymer, and a weight ratio of the α-olefin copolymer to the polymer elastomer is (1-30) : 100.

Further, the solid powder flame retardant is 15-40% in percent by weight, and has a particle size of < 25µm, and 0.1µm ≤ D50 ≤ 15µm, and is selected from at least one of a phosphorus-based flame retardant or a nitrogen-based flame retardant. Preferably, the flame retardant includes a blend of the phosphorus-based flame retardant and the nitrogen-based flame retardant at a mass ratio of 100: (5-10). Specifically, the phosphorus-based flame retardant may include one or more of metal hypophosphite and ammonium polyphosphate, and the nitrogen-based flame retardant may include one or more of melamine and salts thereof.

Further, the flame retardant also includes a flame retardant additive accounting for 1-5% of a total weight of the flame retardant, the flame retardant additive includes mesoporous silica, and the mesoporous silica has a particle size of < 25µm, and an average pore size of 10-50 nm. Having the advantages of small size, colorless transparency, high visible light transmittance, high thermal stability, and porous smoke suppression, the mesoporous silica can enhance the flame retardancy of the product in synergy with the flame retardant, without affecting the light transmittance of the product.

In a second aspect, the present invention provides a preparation method for the transparent flame-retardant hot-melt pressure-sensitive adhesive, including the following steps:
S1. adding the main resin, the tackifying resin, the antioxidant, the anti-aging agent and optional plasticizer to preheated reaction equipment, and stirring thoroughly to obtain a pre-mix A; and
S2. adding the flame retardant to the pre-mix A, stirring thoroughly, and then evacuating to obtain the finished transparent flame-retardant hot-melt pressure-sensitive adhesive.

In a third aspect, the present invention provides an application of the transparent flame-retardant hot-melt pressure-sensitive adhesive in optical cable bonding, so as to better utilize the transparent flame-retardant hot-melt pressure-sensitive adhesive.

Specifically, the optical cable bonding includes the following steps:
(1) performing corona treatment on at least part of an outer surface of the optical cable;
(2) melting the transparent flame-retardant hot-melt pressure-sensitive adhesive and applying the same onto the part of the outer surface of the optical cable that has been subjected to the corona treatment, and cooling for setting; and
(3) applying pressure onto the optical cable, and optical cable bonding to a target object using the transparent flame-retardant hot-melt pressure-sensitive adhesive.

The present invention has at least the following advantages:
1. Through strict material selection and design of formulation, the present invention provides a safe, durable, transparent and aesthetical hot-melt pressure-sensitive adhesive for the transparent optical cable. When in use, the hot-melt pressure-sensitive adhesive is bound by applying moderate pressure. In the actual laying construction, a bonding part of the optical cable is in contact with a wall surface, and the bonding part can be bonded and fixed onto the wall surface by squeezing or pressing the optical cable. Thus, the optical cable can be bonded quickly and reliably onto the wall surface, without the need of adding or heating the adhesive layer repeatedly, making the operation simple and convenient, adaptable to various application scenarios, significantly improving the efficiency of the laying of the optical cable. In addition, the production process for the hot-melt pressure-sensitive adhesive is simple, with stable product quality, offering advantages for large-scale continuous production.
2. On the basis of using the small-particle phosphorus-nitrogen flame retardant compound, the present invention further introduces the mesoporous silica. Making use of the advantages of small size, colorless transparency, high visible light transmittance, high thermal stability, and porous smoke suppression, the mesoporous silica can enhance the flame retardancy of the product in synergy with the flame retardant, without affecting the light transmittance of the product.

### DETAILED DESCRIPTION OF EMBODIMENTS

In order to make the objects, technical solutions, and advantages of the present invention clearer, the present invention will be further described below.

A transparent flame-retardant hot-melt pressure-sensitive adhesive, particularly a transparent flame-retardant hot-melt pressure-sensitive adhesive for rapid bonding of an optical cable, where the transparent flame-retardant hot-melt pressure-sensitive adhesive includes the following components in percent by weight:
(1) main resin 10-70%, including:
   1.1 a polymer elastomer, the polymer elastomer has a melt flow index of ≥5 g/10 min, and preferably ≥6 g/10min, at a temperature of 200°C and a load of 5.0 kg; and specifically, the polymer elastomer is selected from one or more of a styrene-butadiene-styrene (SBS) block copolymer, a styrene-ethylene-butadiene-styrene (SEBS) copolymer, a hydrogenated styrene isoprene (SEP) diblock copolymer, a styrene-ethylene/propylene-styrene (SEPS) block copolymer, a styrene-isoprene-styrene (SIS) block copolymer, a butyl rubber (IIR), polyisobutylene (PIB), nitrile butadiene rubber (NBR), isoprene rubber (IR), poly(butadiene-acrylonitrile) (PBAN), synthetic polyolefin rubber (SPR), and poly(butadiene-styrene) (PBS);
   1.2 optionally, an α-olefin copolymer, where a weight ratio of the α-olefin copolymer to the polymer elastomer is (1-30) : 100; and the α-olefin copolymer has a structural formula as follows: 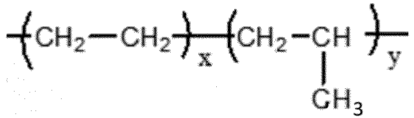
(2) tackifying resin 10-70%, the tackifying resin has a softening point of 60-150°C and is selected from at least one of natural resin or synthetic resin, where the natural resin includes one or more of rosin, a rosin derivative, and terpene resin, and the synthetic resin includes one or more of petroleum resin, coumarone-indene resin, and styrene-based resin;
(3) an antioxidant 0.1-5%, preferably, an antioxidant 168 and an antioxidant 1010 are blended, and particularly preferably, the antioxidant 168 and the antioxidant 1010 are blended at a mass ratio of (0.2-5) : 1;
(4) a plasticizer 0-20%, and preferably 2-20%, and preferably, the plasticizer is mineral oil selected from one or more of white oil, naphthenic oil, and paraffin oil; and
(5) a solid powder flame retardant 10-50%, and preferably 15-40%, with a particle size <35 µm and D50 ≤20 µm, and preferably, the particle size is < 25 µm, and 0.1 µm ≤ D50 ≤15 µm; and the solid powder flame retardant is selected from at least one of a phosphorus-based flame retardant or a nitrogen-based flame retardant, and preferably, the phosphorus-based flame retardant and the nitrogen-based flame retardant are blended at a mass ratio of 100: (5-10); and the flame retardant further includes a flame retardant additive accounting for 1-5% of a total weight of the flame retardant, the flame retardant additive includes mesoporous silica, and the mesoporous silica has a particle size of < 25 µm, and an average pore size of 10-50 nm. The mesoporous silica can be purchased commercially and sieved, or can be self-made using the following steps:
   A. mix hexadecyl trimethyl ammonium bromide (CTAB) with an NaOH solution with a concentration of 1-3 mol/L and stir evenly;
   B. add tetraethyl orthosilicate (TEOS) dropwise, stir vigorously at 80-90°C for 2-3 h, centrifuge, wash, and dry to obtain a white precipitate;
   C. grind the white precipitate and mix the same with an acidic methanol solution, reflux and condense, and reflux with magnetic stirring at 70-90°C for 6-10 h;
   D. perform ultrasonic dispersion and wash with deionized water, centrifuge at a high speed, and dry to obtain the mesoporous silica with an average pore size of 10-50 nm; and
   E. perform sieving to obtain the mesoporous silica with a particle size <25 µm.
   The process for self-making mesoporous silica is simple, both the particle size and the pore size thereof are well controlled, and surface modification such as corona treatment or plasma treatment can be performed later to improve its dispersibility and resin compatibility.
(6) an anti-aging agent 0.1-3%, and preferably, TiO₂ nanoparticles and a light stabilizer are blended to obtain the anti-aging agent, where the light stabilizer is selected from one or more of UV944 and UV622; and more preferably, a mass ratio of the TiO₂ nanoparticles and the light stabilizer is (1-20) : 100.

The transparent flame-retardant hot-melt pressure-sensitive adhesive has a softening point of 80-140°C, a transparency of ≥50%, and a haze of ≤80%.

A preparation method for the transparent flame-retardant hot-melt pressure-sensitive adhesive, particularly a preparation method for the transparent flame-retardant hot-melt pressure-sensitive adhesive for rapid bonding of optical cables, including the following steps:
S1. raise a temperature of reaction equipment to above 100°C, preferably above 120°C, and more preferably 140-180°C; and add the main resin, the plasticizer, the tackifying resin, the antioxidant, and the anti-aging agent to the preheated reaction equipment, and stir thoroughly to obtain a pre-mix A; and
S2. add the flame retardant to the pre-mix A, stir thoroughly, and then evacuate to obtain the transparent flame-retardant hot-melt pressure-sensitive adhesive.

An application of the transparent flame-retardant hot-melt pressure-sensitive adhesive in optical cable bonding is provided, and the application mainly includes preparing optical cables with the transparent flame-retardant hot-melt pressure-sensitive adhesive, and optical cable bonding. Specifically, the optical cable bonding includes the following steps:
(1) perform corona treatment on at least part of an outer surface of the optical cable;
(2) melt the transparent flame-retardant hot-melt pressure-sensitive adhesive and apply the same onto the part of the outer surface of the optical cable that has been subjected to the corona treatment, and cool for setting; and
(3) apply pressure onto the optical cable and bond the optical cable to a target object using the transparent flame-retardant hot-melt pressure-sensitive adhesive.

A size of an adhesive dispensing nozzle of adhesive dispensing equipment can be adjusted according to specific production environment of the hot-melt pressure-sensitive adhesive, for example, an amount of adhesive required can be adjusted according to width and thickness of the optical cable. The adhesive will be difficult to be dispensed when an inner diameter of the adhesive dispensing nozzle is too small; and the adhesive will be overflowed or excessive when the inner diameter of the adhesive dispensing nozzle is too large, therefore, the inner diameter of the adhesive dispensing nozzle of the adhesive dispensing equipment should be set to 0.1-5 mm.

In the present invention, bonding of the optical cable outwards is simple and safe, with low construction intensity and mild conditions, thereby meeting various needs and having the prospect of promotion and application.

The technical solutions of the present invention will be described below clearly and comprehensively in conjunction with preparation examples A-C in the present invention. Apparently, the embodiments described are merely some embodiments rather than all embodiments of the present invention. All other embodiments obtained by those of ordinary skill in the art based on the embodiments of the present invention shall fall within the scope of protection of the present invention. The main materials used in the embodiments of the present invention are for experimental reference only and are not necessary limitations on the technical solution of the present invention, and those skilled in the art can purchase or self-make the corresponding raw materials as needed based on the present invention.

### Preparation Example A

Examples A1-A2: a temperature of high-temperature stirring reaction equipment was raised to 150°C, a styrene-isoprene-styrene (SIS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 10 µm but less than 25 µm, D50 at 16±0.5 µm through screening; MCA with D50 approximately 2 µm) was then added into the pre-mix A and stirred thoroughly until reaction was uniformed, vacuum extraction was then performed to obtain hot-melt pressure-sensitive adhesives A1 and A2, and the adhesives were finally filled and discharged.

Example A3: a temperature of high-temperature stirring reaction equipment was raised to 150°C, a styrene-isoprene-styrene (SIS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 5 µm but less than 20 µm, D50 at 12±0.5 µm through screening; MCA with D50 approximately 2 µm), and self-made mesoporous silica as a flame retardant additive were then added into the pre-mix A, and stirred thoroughly until reaction was uniformed, vacuum extraction was then performed to obtain a hot-melt pressure-sensitive adhesive A3, and the adhesive was finally filled and discharged.

Comparative Example A4: a temperature of high-temperature stirring reaction equipment was raised to 150°C, a styrene-isoprene-styrene (SIS) block copolymer, an amorphous α-olefin copolymer (APAO), tackifying resin, mineral oil, an antioxidant, and an anti-aging agent were added into the reaction equipment, and stirred thoroughly until reaction was uniformed, vacuum extraction was then performed to obtain a hot-melt pressure-sensitive adhesive A4, and the adhesive was finally filled and discharged.

Comparative Example A5: a temperature of high-temperature stirring reaction equipment was raised to 150°C, a styrene-isoprene-styrene (SIS) block copolymer, an amorphous α-olefin copolymer (APAO), tackifying resin, mineral oil, an antioxidant, an anti-aging agent and a flame retardant (AP462 with a particle size approximately 52-58 µm through screening) were added into the reaction equipment, and stirred thoroughly until reaction was uniformed, vacuum extraction was then performed to obtain a hot-melt pressure-sensitive adhesive A5, and the adhesive was finally filled and discharged. Specific components and ratios of A1-A5 were shown in Table 1 as below:

**Table 1. Components and ratios for preparing hot-melt pressure-sensitive adhesives A1, A2, A3, A4 and A5**

| Component/wt% | Product name | A1 | A2 | A3 | A4 | A5 |
|---|---|---|---|---|---|---|
| SIS | VECTOR 4113 | 10 | 41 | 10 | 30 | 10 |
| APAO | Aerafin 80 | 3 | 3 | 3 | 3 | 3 |
| Mineral oil | 4010 | 10 | 10 | 10 | 10 | 10 |
| Antioxidant | 168:1010 (1:4) | 1 | 1 | 1 | 1 | 1 |
| Tackifying resin | HF-100 | 41 | 10 | 41 | 55 | 41 |
| Flame retardant | AP423 | 31 | 31 | 30 | 0 | 0 |
| Flame retardant | MCA | 3 | 3 | 3 | 0 | 0 |
| Flame retardant additive | Self-made mesoporous silica | 0 | 0 | 1 | 0 | 0 |
| Flame retardant | AP462 | 0 | 0 | 0 | 0 | 34 |
| Anti-aging agent | UV944:TiO₂ (10:1) | 1 | 1 | 1 | 1 | 1 |

### Preparation Example B

Examples B1-B2: a temperature of high-temperature stirring reaction equipment was raised to 150°C, a styrene-butadiene-styrene (SBS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 10 µm but less than 25 µm, D50 at 16±0.5 µm through screening; MCA with D50 approximately 2 µm) was then added into the pre-mix A and stirred thoroughly until reaction was uniformed, vacuum extraction was then performed to obtain hot-melt pressure-sensitive adhesives B1 and B2, and the adhesives were finally filled and discharged.

Example B3: a temperature of high-temperature stirring reaction equipment was raised to 150°C, a styrene-butadiene-styrene (SBS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 5 µm but less than 20 µm, D50 at 12±0.5 µm through screening; MCA with D50 approximately 2 µm), and self-made mesoporous silica as a flame retardant additive were then added into the pre-mix A, and stirred thoroughly until reaction was uniformed, vacuum extraction was then performed to obtain a hot-melt pressure-sensitive adhesive B3, and the adhesive was finally filled and discharged.

Comparative Example B4: a temperature of high-temperature stirring reaction equipment was raised to 150°C, a styrene-butadiene-styrene (SBS) block copolymer, an amorphous α-olefin copolymer (APAO), tackifying resin, mineral oil, an antioxidant, and an anti-aging agent were added into the reaction equipment, and stirred thoroughly until reaction was uniformed, vacuum extraction was then performed to obtain a hot-melt pressure-sensitive adhesive B4, and the adhesive was finally filled and discharged.

Comparative Example B5: a temperature of high-temperature stirring reaction equipment was raised to 150°C, a styrene-butadiene-styrene (SBS) block copolymer, an amorphous α-olefin copolymer (APAO), tackifying resin, mineral oil, an antioxidant, an anti-aging agent and a flame retardant (AP462 with a particle size approximately 52-58 µm through screening) were added into the reaction equipment, and stirred thoroughly until reaction was uniformed, vacuum extraction was then performed to obtain a hot-melt pressure-sensitive adhesive B5, and the adhesive was finally filled and discharged. Specific components and ratios of B1-B5 were shown in Table 2 as below:

**Table 2. Components and ratios for preparing hot-melt pressure-sensitive adhesives B1, B2, B3, B4 and B5**

| Component/wt% | Product name | B1 | B2 | B3 | B4 | B5 |
|---|---|---|---|---|---|---|
| SBS | GP3522 | 10 | 41 | 10 | 30 | 10 |
| APAO | Aerafin 80 | 3 | 3 | 3 | 3 | 3 |
| Mineral oil | 4010 | 10 | 10 | 10 | 10 | 10 |
| Antioxidant | 168:1010 (1:4) | 1 | 1 | 1 | 1 | 1 |
| Tackifying resin | HF-100 | 41 | 10 | 41 | 55 | 41 |
| Flame retardant | AP423 | 31 | 31 | 30 | 0 | 0 |
| Flame retardant | MCA | 3 | 3 | 3 | 0 | 0 |
| Flame retardant additive | Self-made mesoporous silica | 0 | 0 | 1 | 0 | 0 |
| Flame retardant | AP462 | 0 | 0 | 0 | 0 | 34 |
| Anti-aging agent | UV944:TiO₂ (10:1) | 1 | 1 | 1 | 1 | 1 |

### Preparation Example C

Examples C1-C2: a temperature of high-temperature stirring reaction equipment was raised to 150°C, a styrene-ethylene/propylene-styrene (SEPS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 10 µm but less than 25 µm, D50 at 16±0.5 µm through screening; MCA with D50 approximately 2 µm) was then added into the pre-mix A and stirred thoroughly until reaction was uniformed, vacuum extraction was then performed to obtain hot-melt pressure-sensitive adhesives C1 and C2, and the adhesives were finally filled and discharged.

Example C3: a temperature of high-temperature stirring reaction equipment was raised to 150°C, a styrene-ethylene/propylene-styrene (SEPS) block copolymer, an amorphous α-olefin copolymer (APAO), tackifying resin, mineral oil, an antioxidant, and an anti-aging agent were added into the reaction equipment, and stirred thoroughly to obtain a pre-mix A; a solid powder flame retardant (AP423 with a particle size greater than 5 µm but less than 20 µm, D50 at 12±0.5 µm through screening; MCA with D50 approximately 2 µm), and self-made mesoporous silica as a flame retardant additive were then added into the pre-mix A, and stirred thoroughly until reaction was uniformed, vacuum extraction was then performed to obtain a hot-melt pressure-sensitive adhesive C3, and the adhesive was finally filled and discharged.

Comparative Example C4: a temperature of high-temperature stirring reaction equipment was raised to 150°C, a styrene-ethylene/propylene-styrene (SEPS) block copolymer, an amorphous α-olefin copolymer (APAO), tackifying resin, mineral oil, an antioxidant, and an anti-aging agent were added into the reaction equipment, and stirred thoroughly until reaction was uniformed, vacuum extraction was then performed to obtain a hot-melt pressure-sensitive adhesive C4, and the adhesive was finally filled and discharged.

Comparative Example C5: a temperature of high-temperature stirring reaction equipment was raised to 150°C, a styrene-ethylene/propylene-styrene (SEPS) block copolymer, an amorphous α-olefin copolymer (APAO), tackifying resin, mineral oil, an antioxidant, an anti-aging agent and a flame retardant (AP462 with a particle size approximately 52-58 µm through screening) were added into the reaction equipment, and stirred thoroughly until reaction was uniformed, vacuum extraction was then performed to obtain a hot-melt pressure-sensitive adhesive C5, and the adhesive was finally filled and discharged. Specific components and ratios of C1-C5 were shown in Table 3 as below:

**Table 3. Components and ratios for preparing hot-melt pressure-sensitive adhesives C1, C2, C3, C4 and C5**

| Component/wt% | Product name | C1 | C2 | C3 | C4 | C5 |
|---|---|---|---|---|---|---|
| SEPS | G1750 | 10 | 41 | 10 | 30 | 10 |
| APAO | Aerafin 80 | 3 | 3 | 3 | 3 | 3 |
| Mineral oil | 4010 | 10 | 10 | 10 | 10 | 10 |
| Antioxidant | 168:1010 (1:4) | 1 | 1 | 1 | 1 | 1 |
| Tackifying resin | S1100 | 41 | 10 | 41 | 55 | 41 |
| Flame retardant | AP423 | 31 | 31 | 30 | 0 | 0 |
| Flame retardant | MCA | 3 | 3 | 3 | 0 | 0 |
| Flame retardant additive | Self-made mesoporous silica | 0 | 0 | 1 | 0 | 0 |
| Flame retardant | AP462 | 0 | 0 | 0 | 0 | 34 |
| Anti-aging agent | UV944:TiO₂ (10:1) | 1 | 1 | 1 | 1 | 1 |

The main materials used in the embodiments of the present invention are shown in Table 4, and the main materials are for experimental reference only and are not necessary limitations on the technical solution of the present invention, and those skilled in the art can purchase or self-make the corresponding raw materials as needed based on the present invention.

**Table 4 List of raw materials**

| Product | Manufacturer | Product Brand No. | Melt flow index g/10min | Ring and ball softening point/°C | Particle size/µm |
|---|---|---|---|---|---|
| SIS | TSRC Corporation | 4113 | 11 | - | - |
| SBS | LCY Chemical Corp. | GP3522 | 15 | - | - |
| SEPS | KRATON | G1750 | 8 | - | - |
| α-olefin copolymer | Aerafin | Aerafin 80 | - | - | - |
| Mineral oil | PetroChina Karamay Petrochemical Co., Ltd. | 4010 | - | - | - |
| Antioxidant | Rianlon | 168 | - | - | - |
| Antioxidant | Rianlon | 1010 | - | - | - |
| Tackifying resin | HENGHE | HF-100 | - | 100±5 | - |
| Tackifying resin | Eastman (Regalite) | S1100 | - | 100 | - |
| Solid powder flame retardant | Clariant Chemicals | AP423 | - | - | < 40µm |
| Solid powder flame | Dongguan Xingyuan | MCA | - | - | D50 about 2 µm |
| retardant | Chemical Co., Ltd | | | | |
| Solid powder flame retardant | Clariant Chemicals | AP462 | - | - | > 50µm |
| Anti-aging agent | Rianlon | UV944 | - | - | - |
| TiO₂ | DuPont | R-105 | - | - | ≤ 310nm |
| Self-made mesoporous silica | | | | | < 25µm |

Test conditions for the melt flow index in Table 4 were at a temperature of 200°C and a load of 5.0 kg.

The self-made mesoporous silica was prepared by the following steps:
A. hexadecyl trimethyl ammonium bromide (CTAB, purchased from Hubei Kemaidi) was mixed with an NaOH solution with a concentration of 1-3 mol/L and stirred evenly;
B. Added ethyl silicate or tetraethyl orthosilicate (TEOS, purchased from Condice Chemical) dropwise, stirred vigorously at 80-90°C for 2-3 h, centrifuged, washed, and dried to obtain a white precipitate;
C. the white precipitate was ground and mixed an acidic methanol solution, refluxed and condensed, and refluxed with magnetic stirring at 70-90°C for 6-10 h;
D. ultrasonic dispersion and washing with deionized water were performed, centrifuged at a high speed, and dried to obtain the mesoporous silica with an average pore size of 10-50 nm; and
E. sieving was performed to obtain the mesoporous silica with a particle size <25 µm.

### Test methods and results:

### (1) Softening point test

Test method: a sample of the hot-melt pressure-sensitive adhesive was melted in a ringshaped mold and kept stand for 24 h, and a softening point of the adhesive was tested using a softening point tester.

### (2) Haze and transparency test

Test method: a blade coater was used to apply the sample of the hot-melt pressure-sensitive adhesive onto a release surface of a 50 µm transparent PET release film at a temperature of 170°C, a thickness of the adhesive film was controlled to 400 µm, a haze tester was used to test haze and transparency of the sample of the hot-melt pressure-sensitive adhesive, and the test method was subject to the method stated in the *Determination of the Luminous Transmittance and Haze of Transparent Plastics* (GB/T 2410-2008).

### (3) Flame retardancy performance test

(3.1) Test method: the test method was subject to the method stated in the *Test Method for Heat Release Rate of Building Materials* (GB/T 16172-2007).

(3.2) Test method: the hot-melt pressure-sensitive adhesive was applied onto the optical cable, and the flame retardancy of a finished cable was tested. A specific test method was subject to IEC 60332-1-2 and EN 50399.

### (4) Test of adhesion to board

Test method: the sample of the hot-melt pressure-sensitive adhesive was applied onto an optical cable (with a width of 3.2 mm, a thickness of 1.3 mm, and a length of 100 mm), a width, a thickness and a length of an adhesive layer of the hot-melt pressure-sensitive adhesive were controlled to be 3.2 mm, 0.4 mm, and 100 mm, respectively, a sample of the optical cable coated with the hot-melt pressure-sensitive adhesive was fully covered on a beechwood board substrate (with a width of 100 mm, a thickness of 5 mm, and a length of 200 mm), and then placed at a temperature of 23°C for 4 h, 90° peeling force was tested, with four parallel tests performed, and an average value of test results was taken.

### (5) Test of adhesion to latex paint

Test method: the sample of the hot-melt pressure-sensitive adhesive was applied onto an optical cable (with a width of 3.2 mm, a thickness of 1.3 mm, and a length of 100 mm), a width, a thickness and a length of an adhesive layer of the hot-melt pressure-sensitive adhesive were controlled to be 3.2 mm, 0.4 mm, and 100 mm, respectively, a sample of the optical cable coated with the hot-melt pressure-sensitive adhesive was fully covered on a substrate with the latex paint (with a width of 100 mm, a thickness of 2 mm, and a length of 200 mm), and then placed at a temperature of 23°C for 4 h, 90° peeling force was tested, with four parallel tests performed, and an average value of test results was taken.

### (6) Test of adhesion to wallpaper

Test method: the sample of the hot-melt pressure-sensitive adhesive was applied onto an optical cable (with a width of 3.2 mm, a thickness of 1.3 mm, and a length of 100 mm), a width, a thickness and a length of an adhesive layer of the hot-melt pressure-sensitive adhesive were controlled to be 3.2 mm, 0.4 mm, and 100 mm, respectively, a sample of the optical cable coated with the hot-melt pressure-sensitive adhesive was fully covered on a PVC wallpaper substrate (with a width of 100 mm, a thickness of 0.5 mm, and a length of 200 mm), and then placed at a temperature of 23°C for 4 h, 90° peeling force was tested, with four parallel tests performed, and an average value of test results was taken.

### (7) Thermal stability test

Test method: the sample of the hot-melt pressure-sensitive adhesive was applied onto an optical cable (with a width of 3.2 mm, a thickness of 1.3 mm, and a length of 100 mm), a width, a thickness and a length of an adhesive layer of the hot-melt pressure-sensitive adhesive were controlled to be 3.2 mm, 0.4 mm, and 100 mm, respectively, a sample of the optical cable coated with the hot-melt pressure-sensitive adhesive was fully covered on a beechwood board substrate (with a width of 100 mm, a thickness of 5 mm, and a length of 200 mm), and then placed in an oven at a temperature of 70°C for 48 h to observe whether there was any adhesive overflow, 90° peeling force was tested, with four parallel tests performed, and an average value of test results was taken.

### (8) Low-temperature stability test

Test method: a beechwood board was used as a substrate, the sample of the hot-melt pressure-sensitive adhesive was applied onto an optical cable (with a width of 3.2 mm, a thickness of 1.3 mm, and a length of 100 mm), a width, a thickness and a length of an adhesive layer of the hot-melt pressure-sensitive adhesive were controlled to be 3.2 mm, 0.4 mm, and 100 mm, respectively, a sample of the optical cable coated with the hot-melt pressure-sensitive adhesive was fully covered on the beechwood board substrate (with a width of 100 mm, a thickness of 5 mm, and a length of 200 mm), and then placed a walk-in refrigerator at a temperature of 5°C for 4 h, 90° peeling force was tested, with four parallel tests performed, and an average value of test results was taken.

Results of the tests (1) to (3) were shown in Table 5.

**Table 5 Test results of Examples and Comparative Examples**

| Sample | Softening point/°C | Haze/% | Transparency/% | Peak heat release rate/kW/m² | Flame retardant grade |
|---|---|---|---|---|---|
| A1 | 110 | 25 | 85 | 300 | D2ca |
| A2 | 132 | 26 | 86 | 351 | D2ca |
| A3 | 112 | 26 | 88 | 290 | D2ca |
| A4 | 94 | 25 | 88 | 600 | E2ca |
| A5 | 115 | 82 | 67 | 360 | D2ca |
| B1 | 109 | 26 | 86 | 321 | D2ca |
| B2 | 120 | 22 | 87 | 389 | D2ca |
| B3 | 110 | 25 | 89 | 285 | D2ca |
| B4 | 95 | 17 | 88 | 589 | E2ca |
| B5 | 116 | 80 | 49 | 321 | D2ca |
| C1 | 99 | 22 | 86 | 346 | D2ca |
| C2 | 108 | 24 | 85 | 358 | D2ca |
| C3 | 105 | 26 | 89 | 300 | D2ca |
| C4 | 90 | 18 | 89 | 568 | E2ca |
| C5 | 111 | 81 | 60 | 369 | D2ca |

The hot-melt pressure-sensitive adhesives prepared in Examples A1-A3, B1-B3, and C1-C3 of the present invention had the softening points of 80°C-140°C, and especially 95°C-140°C, indicating that the hot-melt pressure-sensitive adhesive of the present invention exhibited good thermal stability, and could maintain high strength at high temperatures. Overall, the samples using the flame retardants exhibited higher thermal stability.

Haze values of the samples of the hot-melt pressure-sensitive adhesives in all the Examples were all lower than 30%, and the transparency of the same was greater than 80%, basically above 85%, indicating that the hot-melt pressure-sensitive adhesive of the present invention exhibited excellent transparency. The hot-melt pressure-sensitive adhesives in Comparative Samples A4, B4, and C4 without the flame retardants did not change greatly, and exhibited good transparency. However, the haze values of the hot-melt pressure-sensitive adhesives in Comparative Samples A5, B5, and C5 were all greater than 70%, and the transparency thereof were significantly decreased, indicating that the flame retardants and particle sizes thereof had a considerable impact on the optical properties of the hot-melt pressure-sensitive adhesives.

In Examples A1-A3, B 1-B3, and C1-C3, the peak heat release rates of the hot-melt pressure-sensitive adhesives were between 280-400 kW/m², and the flame retardant grades of the finished cables coated with the hot-melt pressure-sensitive adhesives were D2ca. In contrast, the peak heat release rates of the hot-melt pressure-sensitive adhesives in Comparative Samples A4, B4, and C4 all exceeded 500 kW/m², the flame retardant grades thereof were E2ca, and none of them passed D2ca. The test results demonstrated that the hot-melt pressure-sensitive adhesives of the present invention exhibited excellent flame retardant performance.

Results of the tests (4) to (6) were shown in Table 6.

**Table 6 Test results of Examples and Comparative Examples**

| Sample | Board bonding performance | | Latex paint bonding performance | | Wallpaper bonding performance | |
|---|---|---|---|---|---|---|
| | Adhesive force/N/mm | Failure mode | Adhesive force/N/mm | Failure mode | Adhesive force/N/mm | Failure mode |
| A1 | 2.0 | Interfacial failure | 2.2 | Cohesive failure | 1.7 | Interfacial failure |
| A2 | 1.6 | Interfacial failure | 1.8 | Cohesive failure | 1.6 | Interfacial failure |
| A3 | 1.9 | Interfacial failure | 2.3 | Cohesive failure | 1.7 | Interfacial failure |
| A4 | 1.8 | Interfacial failure | 2.0 | Cohesive failure | 1.8 | Interfacial failure |
| A5 | 1.0 | Interfacial failure | 1.0 | Interfacial failure | 1.0 | Interfacial failure |
| B1 | 2.2 | Interfacial failure | 2.4 | Cohesive failure | 1.5 | Interfacial failure |
| B2 | 1.7 | Interfacial failure | 2.1 | Cohesive failure | 1.3 | Interfacial failure |
| B3 | 2.3 | Interfacial failure | 2.3 | Cohesive failure | 1.3 | Interfacial failure |
| B4 | 1.6 | Interfacial failure | 2.0 | Cohesive failure | 1.6 | Interfacial failure |
| B5 | 1.1 | Interfacial failure | 1.1 | Interfacial failure | 1.1 | Interfacial failure |
| C1 | 1.9 | Interfacial failure | 1.9 | Cohesive failure | 1.9 | Interfacial failure |
| C2 | 2.0 | Interfacial failure | 2.1 | Cohesive failure | 2.0 | Interfacial failure |
| C3 | 2.0 | Interfacial failure | 2.0 | Cohesive failure | 1.8 | Interfacial failure |
| C4 | 2.3 | Interfacial failure | 2.2 | Cohesive failure | 1.3 | Interfacial failure |
| C5 | 0.9 | Interfacial failure | 1.0 | Interfacial failure | 0.9 | Interfacial failure |

In the examples of the present invention, the adhesive force of the samples of the hot-melt pressure-sensitive adhesives to the board was greater than 1.5 N/mm, and the failure mode was that the adhesive was adhered onto the optical cable, and an interfacial failure with the board was found. The test results demonstrated that the hot-melt pressure-sensitive adhesive had excellent adhesive force to the optical cable, and that the optical cable produced using the hot-melt pressure-sensitive adhesive of the present invention had good adhesive force to the board.

In the examples of the present invention, the adhesive force of the samples of the hot-melt pressure-sensitive adhesives to the latex paint was greater than 1.6 N/mm, and the failure mode was the cohesive failure inside the adhesive layer. The test results demonstrated that the optical cable produced using the hot-melt pressure-sensitive adhesive of the present invention had good adhesive force to the latex paint.

In the examples of the present invention, the adhesive force of the samples of the hot-melt pressure-sensitive adhesives to the wallpaper was greater than 1.2 N/mm, and the failure mode was that the adhesive was adhered onto the optical cable, and an interfacial failure with the wallpaper was found. The test results demonstrated that the hot-melt pressure-sensitive adhesive had excellent adhesive force to the optical cable, and that the optical cable produced using the hot-melt pressure-sensitive adhesive of the present invention had good adhesive force to the wallpaper.

Results of the tests (7) to (8) were shown in Table 7.

**Table 7 Test results of Examples and Comparative Examples**

| Sample | Thermal stability | | | Low-temperature stability | |
|---|---|---|---|---|---|
| | Adhesive force/N/mm | Failure mode | Adhesive overflow or not | Adhesive force/N/mm | Failure mode |
| A1 | 2.0 | Interfacial failure | No | 1.9 | Interfacial failure |
| A2 | 1.8 | Interfacial failure | No | 1.7 | Interfacial failure |
| A3 | 2.0 | Interfacial failure | No | 1.8 | Interfacial failure |
| A4 | 1.8 | Interfacial failure | Yes | 1.1 | Interfacial failure |
| A5 | 1.0 | Interfacial failure | No | 0.7 | Interfacial failure |
| B1 | 2.3 | Interfacial failure | No | 1.4 | Interfacial failure |
| B2 | 1.7 | Interfacial failure | No | 1.5 | Interfacial failure |
| B3 | 1.9 | Interfacial failure | No | 1.4 | Interfacial failure |
| B4 | 1.6 | Interfacial failure | Yes | 1.1 | Interfacial failure |
| B5 | 0.9 | Interfacial failure | No | 0.9 | Interfacial failure |
| C1 | 1.8 | Interfacial failure | No | 1.3 | Interfacial failure |
| C2 | 2.1 | Interfacial failure | No | 1.4 | Interfacial failure |
| C3 | 1.9 | Interfacial failure | No | 1.3 | Interfacial failure |
| C4 | 2.0 | Interfacial failure | Yes | 1.0 | Interfacial failure |
| C5 | 0.8 | Interfacial failure | No | 0.6 | Interfacial failure |

For the thermal stability test, the adhesive force of the samples of the hot-melt pressure-sensitive adhesives in the examples of the present invention to the board at 70°C was greater than 1.5 N/mm, and the failure mode was that the adhesive was adhered onto the optical cable, and an interfacial failure with the board was found. Compared with the adhesive force to the board at room temperature of 23°C, a storage temperature of 70°C had little impact on the adhesive force. In addition, under the storage condition of 70°C for 48 h, the samples of the hot-melt pressure-sensitive adhesives in all Examples suffered no adhesive overflow, but the samples of the hot-melt pressure-sensitive adhesives in Comparative Examples A4, B4 and C4 suffered adhesive overflow to varying degrees. The test results demonstrated that the samples of the hot-melt pressure-sensitive adhesives of all Examples of the present invention exhibited good thermal stability, and the optical cables using the hot-melt pressure-sensitive adhesives of the present invention could better adapt to high-temperature environments.

The test results of the low-temperature stability demonstrated that the adhesive forces of the samples of the hot-melt pressure-sensitive adhesives of all Examples at a temperature of 5°C were not lower than 1 N/mm, and the test results demonstrated that the hot-melt pressure-sensitive adhesives of all Examples exhibited good low-temperature resistance, and the optical cables using the the hot-melt pressure-sensitive adhesives of the present invention could better adapt to low-temperature environments.

The above description specifies the preferred embodiments of the present invention, which is intended to make the spirit of the present invention clearer and easier to understand, but is not intended to limit the present invention. Any and all modifications, substitutions, or improvements made within the spirit and principles of the present invention should be included within the scope of protection claimed by the present invention.

## Claims

1. A transparent flame-retardant hot-melt pressure-sensitive adhesive, **characterized in that** a total weight of the transparent flame-retardant hot-melt pressure-sensitive adhesive is taken as 100%, and the transparent flame-retardant hot-melt pressure-sensitive adhesive comprises the following components in percent by weight:
main resin 10-70%;
tackifying resin 10-70%;
an antioxidant 0.1-5%;
a plasticizer 0-20%;
a solid powder flame retardant 10-50%;
an anti-aging agent 0.1-3%;
the main resin comprises a polymer elastomer, and the polymer elastomer has a melt flow index of ≥ 5 g/10 min at a temperature of 200°C and a load of 5.0 kg;
the solid powder flame retardant has a particle size of < 35 µm and D50 ≤ 20 µm; and
the transparent flame-retardant hot-melt pressure-sensitive adhesive has a softening point of 80-140°C, a transparency of ≥50%, and a haze of ≤80%.

2. The transparent flame-retardant hot-melt pressure-sensitive adhesive according to claim 1, **characterized in that** the polymer elastomer is selected from one or more of a styrene-butadiene-styrene block copolymer, a styrene-ethylene-butadiene-styrene copolymer, a hydrogenated styrene isoprene diblock copolymer, a styrene-ethylene/propylene-styrene block copolymer, a styrene-isoprene-styrene block copolymer, butyl rubber, polyisobutylene, nitrile butadiene rubber, isoprene rubber, poly(butadiene-acrylonitrile), synthetic polyolefin rubber, and poly(butadiene-styrene).

3. The transparent flame-retardant hot-melt pressure-sensitive adhesive according to claim 2, **characterized in that** the tackifying resin has a softening point of 60-150°C and is selected from at least one of natural resin or synthetic resin;
the natural resin comprises one or more of rosin, a rosin derivative, and terpene resin; and
the synthetic resin comprises one or more of petroleum resin, coumarone-indene resin, and styrene-based resin.

4. The transparent flame-retardant hot-melt pressure-sensitive adhesive according to any one of claims 1-3, **characterized in that** the main resin further comprises an α-olefin copolymer, and a weight ratio of the α-olefin copolymer to the polymer elastomer is (1-30) : 100.

5. The transparent flame-retardant hot-melt pressure-sensitive adhesive according to any one of claims 1-3, **characterized in that** the solid powder flame retardant is 15-40% in percent by weight, and has a particle size of < 25µm, and 0.1µm ≤ D50 ≤ 15µm, and is selected from at least one of a phosphorus-based flame retardant or a nitrogen-based flame retardant.

6. The transparent flame-retardant hot-melt pressure-sensitive adhesive according to claim 5, **characterized in that** the flame retardant comprises a blend of the phosphorus-based and the nitrogen-based flame retardant at a mass ratio of 100: (5-10).

7. The transparent flame-retardant hot-melt pressure-sensitive adhesive according to claim 6, **characterized in that** the flame retardant further comprises a flame retardant additive accounting for 1-5% of a total weight of the flame retardant, the flame retardant additive comprises mesoporous silica, and the mesoporous silica has a particle size of < 25µm, and an average pore size of 10-50 nm.

8. A preparation method for the transparent flame-retardant hot-melt pressure-sensitive adhesive according to any one of claims 1-7, comprising the following steps:
S1. adding the main resin, the tackifying resin, the antioxidant, the anti-aging agent and optional plasticizer to preheated reaction equipment, and stirring thoroughly to obtain a pre-mix A; and
S2. adding the flame retardant to the pre-mix A, stirring thoroughly, and then evacuating to obtain the finished transparent flame-retardant hot-melt pressure-sensitive adhesive.

9. An application of the transparent flame-retardant hot-melt pressure-sensitive adhesive according to any one of claims 1-7 in optical cable bonding.

10. The application according to claim 9, **characterized in that** the optical cable bonding comprises the following steps:
(1) performing corona treatment on at least part of an outer surface of the optical cable;
(2) melting the transparent flame-retardant hot-melt pressure-sensitive adhesive and applying the same onto the part of the outer surface of the optical cable that has been subjected to the corona treatment, and cooling for setting; and
(3) applying pressure onto the optical cable, and optical cable bonding to a target object using the transparent flame-retardant hot-melt pressure-sensitive adhesive.
